**Europäisches Patentamt**

**European Patent Office**

**Office européen des brevets**

(11) Veröffentlichungsnummer: **0 490 196 A1**

## EUROPÄISCHE PATENTANMELDUNG

(21) Anmeldenummer: **91120600.1**

(22) Anmeldetag: **29.11.91**

(51) Int. Cl.⁵: **B62L 1/10**

(30) Priorität: **07.12.90 DE 4039116**

(43) Veröffentlichungstag der Anmeldung:
**17.06.92 Patentblatt 92/25**

(84) Benannte Vertragsstaaten:
**AT BE CH DE ES FR GB IT LI LU NL**

(71) Anmelder: **LOOK S.A.**
**Rue de la Pique B.P. 72**
**F-58004 Nevers Cédex(FR)**

(72) Erfinder: **Mercat, Jean-Pierre**
**24 Rue Gambetta**
**F-37110 Chateau-Renault(FR)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

(54) Betätigungsmechanismus, insbesondere für Bremsen, vor allem Fahrradbremsen.

(57) Es wird ein Betätigungsmechanismus, insbesondere für Bremsen und speziell für Fahrradbremsen beschrieben, bei dem zumindest auf einer Führung (17,18) ein länglicher Bügel (19) verschiebbar montiert und ein Arm (27) vorgesehen ist, der an einem von der Führung entfernten Ende (25) des Bügels (19) angelenkt ist, wobei Rückholeinrichtungen (29,32,33,34,35) auf den Bügel und den Arm entgegen einer Betätigungskraft wirken. Durch das Zusammenwirken von Bügel (19) und Arm (27) wird bei einere Betätigung zunächst der Bügel (19) auf der Führung (17,18) verschoben, bei Auftreten einer Gegenkraft durch Kippen auf der Führung (17,18) fixiert und anschließend der Arm (27) zur Ausübung von Bremskräften verschwenkt.

Fig.6

Die Erfindung betrifft einen Betätigungsmechanismus insbesondere für Bremsen, vor allem Fahrradbremsen.

Fahrradbremsen, die auf die Radfelge einwirken, besitzen im allgemeinen zwei Reibungsklötze, die gegenüber den Seitenwänden der Felge angeordnet und von Armen getragen sind, die auf einem oder zwei am Fahrradrahmen befestigten Drehachsen drehbar gelagert sind, so daß sie in einem begrenzten Winkel verschwenkt werden können und sich dabei den Felgenflanken nähern oder sich von ihnen entfernen.

Durch ein Eingangsorgan, gewöhnlich ein Bowdenzug, der durch einen an der Lenkstange des Fahrrads befestigten Handhebel betätigt wird, können die Arme verschwenkt und die Reibungsklötze mit den Flanken der Felge in Berührung gebracht werden, wodurch auf das Rad ein Bremsmoment ausgeübt wird.

Bremsen oder andere Organe mit mechanischer Betätigung für gewisse Kraftfahrzeuge oder für rotierende Maschinen besitzen ähnliche Elemente.

In der Bestrebung, derartige Bremsen bezüglich Sicherheit und Bedienungskomfort zu verbessern, bemüht man sich gegenwärtig vor allem um eine Verringerung der Betätigungsenergie und der Ansprechzeit der Bremse, damit der Benutzer mit weniger Kraftaufwand und schnell eine kräftige Bremsung seines Fahrrads, seines Fahrzeugs oder seiner Maschine erreichen kann. Was Kraftfahrzeuge und Maschinen anlangt, so wird dieses Problem häufig durch Servovorrichtungen gelöst, die die Betätigung durch die Bedienungsperson pneumatisch oder hydraulisch unterstützen.

Bei Fahrrädern oder auch bei Fahrzeugen oder Maschinen, bei denen noch eine ausschließlich manuelle Betätigung vorgesehen ist, wird eine Verbesserung im wesentlichen in zweierlei Hinsicht angestrebt, nämlich bezüglich der Schaffung von Bremsklötzen mit höherem Reibungskoeffizient und einer Erhöhung der Kraft, mit der die Felge durch die Bremsklötze eingespannt wird.

Eine Erhöhung dieser Kraft erreicht man ganz allgemein durch eine Vergrößerung des Verhältnisses zwischen dem Abstand der Drehachse vom Angriffspunkt der manuellen Kraft und dem Abstand der Drehachse vom Bremsklotz. Auf diese Weise erreicht man, daß bei gleichbleibender Eingangskraft eine größere Ausgangskraft auf den Bremsklotz ausgeübt wird und damit eine stärkere Bremsung erzielt wird.

Bei einem gegebenen Weg des Handbetätigungshebels wird jedoch der Arbeitsweg der Bremsklötze in denselben Verhältnissen verringert, was jedoch folgende Nachteile mit sich bringt:

- Das Ansprechen des Handhebels wird sehr empfindlich auf den Abrieb der Bremsklötze, denn dieser Abrieb erhöht den toten Gang, den der Handhebel ausführen muß, bevor die Bremsklötze mit der Felge in Berührung kommen. Sobald der Abrieb ein bestimmtes Maß erreicht, kann es geschehen, daß die gesamte Bewegung des Handhebels für diese Annäherungsbewegung der Bremsklötze erforderlich wird und die Bewegung, die dem Anpressen der Bremsklötze an die Felge und damit der eigentlichen Bremsung entspricht, zu Null wird, was für den Benutzer störend oder sogar gefährlich sein kann.

- Diese Verkürzung des Arbeitswegs der Bremsklötze hat ferner zur Folge, daß diese im gelösten Zustand sehr nahe der Felge angeordnet werden müssen (z.B.1,5 mm), was folgende Probleme mit sich bringt:

  . wenn das Rad leicht verzogen ist, treten zwischen Felge und Bremsklötzen periodische Reibungen auf, die einen Teil der von dem Radfahrer oder dem Motor ausgeübten Antriebsleistung aufbrauchen und den Verschleiß der Bremsklötze beschleunigen;

  . an der Bremse sammelt sich infolge des kleinen Durchgangs zwischen Felge und Bremsklotz Schmutz an. Diese Ansammlung verursacht störende Reibungen und kann die Funktion der Bremse beeinträchtigen. Bei Geländefahrrädern ist dieses Problem besonders ausgeprägt;

  . bei einem Radwechsel oder einem Wechsel der Felgenbreite ist eine spezielle Abstandseinstellung jeweils unerläßlich;

  . eine weitere Neueinstellung der Zentrierung der Bremse wird bei einem Radwechsel erforderlich, wenn die Speichen des Austauschrades nicht in derselben seitlichen Versetzung wie bei dem vorhergehenden Rad angeordnet sind, was häufig der Fall ist.

Aufgrund all dieser Probleme ist eine Vergrößerung des Verhältnisses zwischen dem Abstand der Drehachse vom Angriffspunkt der manuellen Kraft und dem Abstand der Drehachse von dem Bremsklotz in der Praxis sehr begrenzt und nicht weiter optimierbar.

Der Erfindung liegt deshalb die Aufgabe zugrunde, einen Betätigungsmechanismus insbesondere für eine Bremse, vor allem für eine Fahrradbremse, zu schaffen, bei dem der tote Gang, der der Bewegung der Bremsklötze von ihrer gelösten Stellung aus bis zur Berührung der Felge entspricht, von einer verkleinerten Bewegung des Handhebels übernommen wird, und zwar auch dann, wenn die Bremsklötze verschleißen oder die Felge gegen eine schmalere Felge ausgetauscht wird, und bei dem ab dem In-Berührung-Kommen der Bremsklötze mit der Felge eine vergrößerte Bewegung des Handhebels bei einer verringerten Kraft sich in einem verkleinerten Weg und einer erhöhten Kraft in der Ebene der Bremsklötze auswirkt.

Ein weiteres Ziel der Erfindung ist die Schaffung eines derartigen Mechanismus unter Verwendung einer geringen Anzahl von sowohl statischen als auch beweglichen Teilen, die möglichst einfach und unter möglichst geringen Kosten herstellbar und montierbar sind und die nur bei einer geringen Anzahl von Teilen eine hohe Präzision erfordern.

Diese Aufgabe wird erfindungsgemäß durch einen Mechanismus mit den kennzeichnenden Merkmalen des Anspruchs 1 gelöst.

Weitere vorteilhafte Ausführungsformen sind in den Unteransprüchen definiert.

Weitere Einzelheiten und Vorteile der Erfindung ergeben sich aus der folgenden Beschreibung von verschiedenen Ausführungsbeispielen, die in der beiliegenden Zeichnung dargestellt sind. Es zeigen:

Fig. 1    einen vertikalen Schnitt durch eine erste Ausführungsform der Erfindung in der Version einer Fahrradbremse,

Fig. 2    eine Seitenansicht der Bremse von Fig. 1 gemäß dem Pfeil A,

Fig. 3    einen waagerechten Schnitt durch die Bremse von Fig.1 nach der Linie III-III,

Fig. 4    eine Graphik, in der die Beziehungen zwischen der Bewegung des Handhebels und dem Weg der Bremsklötze bei einer Bremse mit herkömmlichem Betätigungsmechanismus und einer Bremse mit einem erfindungsgemäßen Betätigungsmechanismus miteinander verglichen werden,

Fig. 5    einen senkrechten Schnitt, ähnlich Fig. 1, der die Bremse in einer Zwischenstellung zeigt,

Fig. 6    einen den Fig. 1 und 5 entsprechenden Schnitt, der die Bremse in einer angedrückten Bremsstellung zeigt,

Fig. 7    eine schematische Darstellung einer Version des erfindungsgemäßen Betätigungsmechanismus, die zusammen mit einem handelsüblichen Handhebel und einer handelsüblichen Bremse verwendbar ist, und

Fig. 8    eine der Fig. 7 ähnliche schematische Darstellung einer Abwandlung dieser Version.

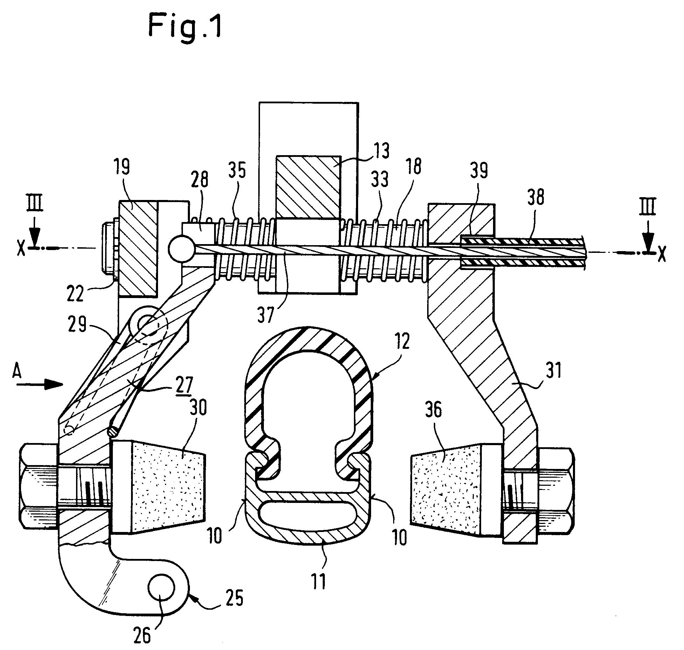

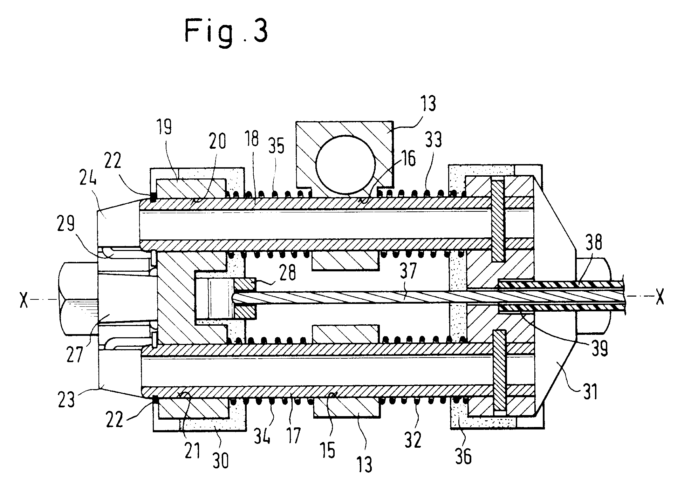

Die in den Fig. 1 bis 3 gezeigte Fahrradbremse wird an einem nicht dargestellten Fahrradrahmen an einer Stelle montiert, wie sie gewöhnlich für die Montage von Bremsen vorgesehen ist, die auf die Flanken 10 der Felge 11 eines Rades 12 einwirken. Sie besitzt zu diesem Zweck einen Sockel 13, der am Rahmen mit einer Schraube 14 befestigt werden kann.

Der Sockel ist in Querrichtung von zwei zueinander parallelen Bohrungen 15 und 16 mit kreisförmigem Querschnitt durchsetzt, in denen zylindrische Führungsstangen 17 und 18 verschiebbar montiert sind, die sich nach beiden Seiten des Sockels parallel zur Drehachse des Rads 12 und damit senkrecht zu den Flanken 10 der Felge erstrecken. Die beiden Führungsstangen legen zusammen eine Führungslinie XX fest.

An einem der Enden der Führungsstangen (links in Fig.1) ist verschiebbar ein länglicher Bügel 19 montiert, der sich allgemein senkrecht nur auf einer Seite der Führungsstangen erstreckt, d.h. an den Stangen überhängend angeordnet ist. Der Bügel besitzt zu diesem Zweck zwei zueinander parallele Bohrungen 20 und 21, durch die die Stangen hindurchtreten. Sicherungsringe 22 oder ähnliche Anschlagsorgane sind an den Enden der Stangen befestigt, um zu verhindern, daß der Bügel die Stangen verläßt. Zwischen dem Sockel 13 und dem Bügel 19 sitzen Schraubenfedern 34, 35, die den Bügel in eine Ruhestellung zurückholen, in der er an den Sicherungsringen in Anschlag und von der Radfelge entfernt ist, wie im nachstehenden noch ausführlicher beschrieben wird.

Der Bügel besitzt zwei L-förmige Schenkel 23, 24, deren Füße 25 auf das Rad 12 zu gerichtet sind. Quer durch die Enden der beiden Füße 25 der Schenkel 23 und 24 ist eine Achse 26 montiert, die eine Drehachse für einen länglichen Arm 27 bildet, der sich in den Zwischenraum zwischen den beiden Schenkeln des Bügels 19 erstreckt. Der Arm erstreckt sich allgemein parallel zum Bügel und sein der Drehachse 26 entgegengesetztes Ende 28 tritt zwischen die beiden Führungsstangen 17,18. Der Arm kann sich somit um die Drehachse 26 zwischen einer Ruhestellung, in der er am Bügel in Anschlag ist, und einer aktiven Stellung (in Fig. 1 nach rechts) verschwenken, wobei er sich der Felge 11 des Rads nähert. Zwischen dem Bügel 19 und dem Arm 27 wirkt eine Rückholfeder 29, die den Arm in seine Ruhestellung zurückholt, in der er an dem Bügel in Anschlag ist.

Der Arm trägt einen Bremsklotz 30, der sich in einem kleinen Abstand senkrecht über der Drehachse 26 befindet.

Auf der anderen Seite des Sockels 13 ist ein zweiter länglicher Bügel 31 an den Enden der Führungsstangen befestigt, der sich nach derselben Seite wie der erste Bügel 19 erstreckt. Dieser zweite Bügel trägt einen zweiten Bremsklotz 36, der sich im wesentlichen in derselben Höhe wie der von dem Arm 27 des ersten Bügels 19 getragene Bremsklotz 30 befindet.

Auf den Stangen sitzen zwischen dem Sockel 13 und dem zweiten Bügel 31 zwei Schraubenfedern 32 und 33, die diesen zusammen mit den Führungsstangen in eine von der Radfelge entfernte Ruhestellung zurückholen. Die Kraft der Federn 32 und 33 ist im wesentlichen gleich der Kraft der Federn 34 und 35, so daß sich die beiden Bremsklötze 30, 36 in der Ruhestellung annähernd im selben Abstand von den Flanken der Felge 11 befinden. Vorzugsweise besitzen die dem zweiten Bügel 31 zugeordneten Rückholfedern 32, 33 eine etwas geringere Steifigkeit als die dem ersten Bügel 19 zugeordneten Federn, was im nachstehenden noch erläutert wird.

Mit der Bremse ist ein aus einem Seil 37 und einem Schlauch 38 bestehender, üblicher Bowdenzug, der nur partiell dargestellt ist, verbunden. Dabei stützt sich der Schlauch 38 des Bowdenzugs in einer in der Führungslinie gelegenen Gegenbohrung 39 des zweiten Bügels 31 ab, und das Seil 37 verläuft seinerseits in dieser Führungslinie, wobei ein Ende am Ende des Arms 27 des ersten Bügels eingehängt ist.

Die im vorstehenden beschriebene Bremse arbeitet folgendermaßen:

a) Ruhestellung

Wenn der Bowdenzug nicht betätigt ist und keine Kraft auf den Arm 27 und den zweiten Bügel 31 ausübt, nehmen die einzelnen Organe die in Fig. 1 gezeigten Stellungen ein. Der Arm 27 ist an dem ersten Bügel 19 in Anschlag, dieser ist an den Sicherungsringen 22 in Anschlag und die aus den beiden Führungsstangen 17 und 18 und den beiden Bügeln 19 und 31 bestehende Einheit ist durch die beiden Federnpaare 32, 33 und 34, 35 in eine auf den Sockel 13 zentrierte Stellung zurückgeholt, so daß sich die beiden Bremsklötze 30, 36 im wesentlichen im gleichen Abstand von den Flanken der Felge 11 befinden.

b) Annäherung

Während der ersten Phase der Betätigung des Bowdenzugs übt das Seil 37 auf den Arm 27 und damit über die Feder 29 auf den ersten Bügel 19 eine Antriebskraft aus, die bewirkt, daß dieser Bügel auf den Führungsstangen 17 und 18 auf den Sockel 13 zu verschoben wird, wenn die Kraft der Federn 34 und 35 überwunden wird. Der Bügel 19 gleitet frei auf den Führungsstangen, da alle ihn betreffenden Kräfte - von seinem Gewicht abgesehen - in der Führungslinie verlaufen, bis der Bremsklotz 30 mit der Felge 11 in Berührung kommt. Die Rückholfeder 29 des Arms muß natürlich, bezogen auf das Ende des Arms, eine etwas größere Kraft als die Federn 34 und 35 ausüben, um zu vermeiden, daß sich der Arm 27 um die Drehachse 29 verschwenkt.

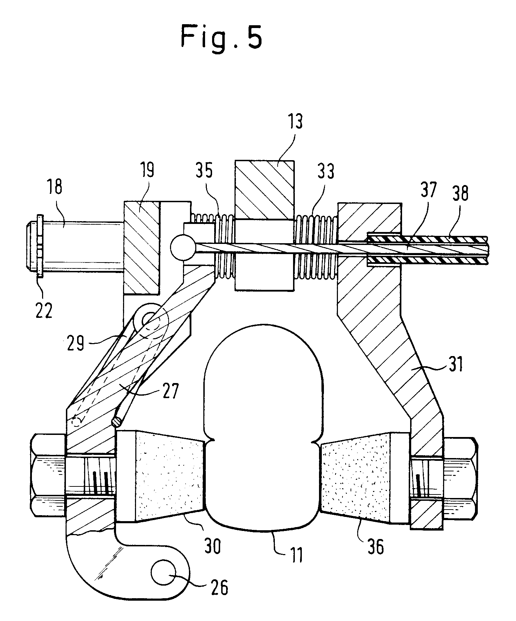

Gleichzeitig übt der Schlauch 38 auf den zweiten Bügel 31 eine Antriebskraft aus, durch die dieser und die Führungsstange in Richtung auf den Sockel 13 verschoben werden, wenn die Kraft der Federn 32 und 33 überwunden wird. Der zweite Bügel gleitet ebenfalls frei, da alle ihn betreffenden Kräfte - abgesehen von seinem Gewicht - in der Führungslinie verlaufen, bis der zweite Bremsklotz 36 mit der Felge 11 in Berührung kommt. Wie bereits erwähnt wurde, besitzen die Federn 32 und 33 eine etwas geringere Steifigkeit als die Federn 34 und 35, so daß der Bremsklotz 36 kurz vor dem ersten Bremsklotz 30 mit der Felge in Berührung kommt. Die Organe nehmen nun die in Fig.5 gezeigte Stellung ein.

Man bemerkt, daß in dieser ersten Phase die Relativbewegung des Seils 37 bezüglich des Schlauchs 38 gleich der Summe der Wege ist, die die Bremsklötze zwischen ihren Ruhestellungen und ihren Stellungen, in denen sie mit der Felge 11 in Berührung sind, zurücklegen.

c) Bremsung

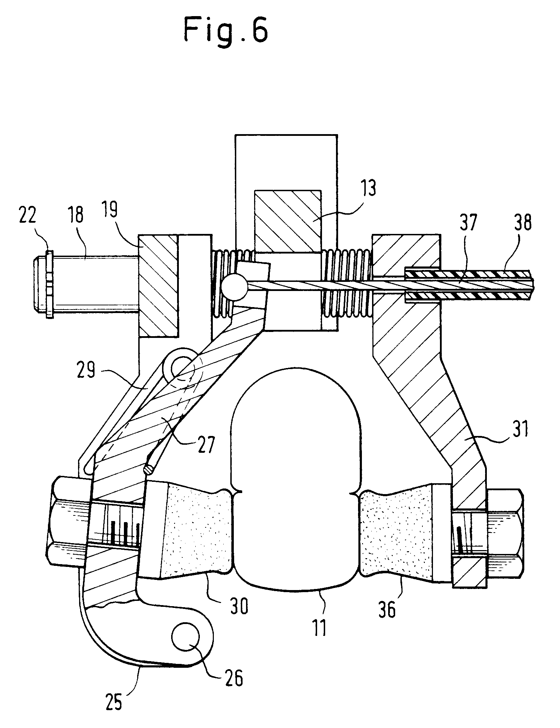

Bei weiterer Betätigung des Seilzugs wird die von dem Seil 37 auf den Arm 27 ausgeübte Kraft in eine von dem Bremsklotz 30 auf die Felge 11 ausgeübte Andruckkraft umgewandelt. Die in entgegengesetzter Richtung von der Felge auf den Bremsklotz ausgeübte und über die Drehachse 26 auf den Bügel übertragene Reaktionskraft hat zur Folge, daß auf den ersten Bügel 19 um eine zur Führungslinie senkrechte Achse ein Drehmoment ausgeübt wird. Infolgedessen wird der Bügel 19 durch Verkantung auf den Führungsstangen 17 und 18 blockiert, kann nicht mehr gleiten und behält eine feste Stellung bezüglich den Führungsstangen bei, und jede weitere Bewegung des Seils 37 hat ein Verschwenken des Arms 27 und des Bremsklotzes 30 um die Drehachse 26 zur Folge, sobald die Kraft der Feder 29 überwunden wird. Infolgedessen wirkt sich jede Bewegung des Seils bei einer gegebenen Betätigungskraft in einer kleineren Bewegung des Bremsklotzes aus, und zwar im Verhältnis des Abstandes des Bremsklotzes von der Drehachse zum Abstand der Führungslinie von der Drehachse, und in einer Kraft, die im umgekehrten Verhältnis größer ist. Gleichzeitig bringt die von dem Schlauch 38 auf den zweiten Bügel 31 ausgeübte Kraft den zweiten Bremsklotz 36 mit der entgegengesetzten Flanke der Felge 11 in Berührung. Die Felge übt auf den Bremsklotz eine Reaktionskraft aus, die zur Folge hat, daß auf den Bügel 31 um eine zur Führungslinie senkrechte Achse ein Drehmoment ausgeübt wird. Dieses Drehmoment wird auf die Führungsstangen 17 und 18 übertragen und wird durch das von dem ersten Bügel 19 übertragene, entgegengesetzte Drehmoment annähernd kompensiert, so daß die Führungsstangen weiter in dem Sockel gleiten können und der zweite Bügel 31 und der zweite Bremsklotz 36 sich der Felge nähern können. Auf diese Weise teilen sich die Bewegung und die Andruckkraft gleichmäßig auf die beiden Bremsklötze 30 und 36 auf. Dieser Zustand ist in Fig.6 gezeigt.

Selbst wenn die Reaktionsmomente des ersten und des zweiten Bügels nicht genau gleich sind und es dadurch zu einer Blockierung der Führungsstangen 17 und 18 im Sockel kommt, wird die Aufteilung der Bewegung und der Andruckkraft auf die beiden Bremsklötze durch eine elastische Querverformung der Felge mit einer begrenzten Amplitude hergestellt.

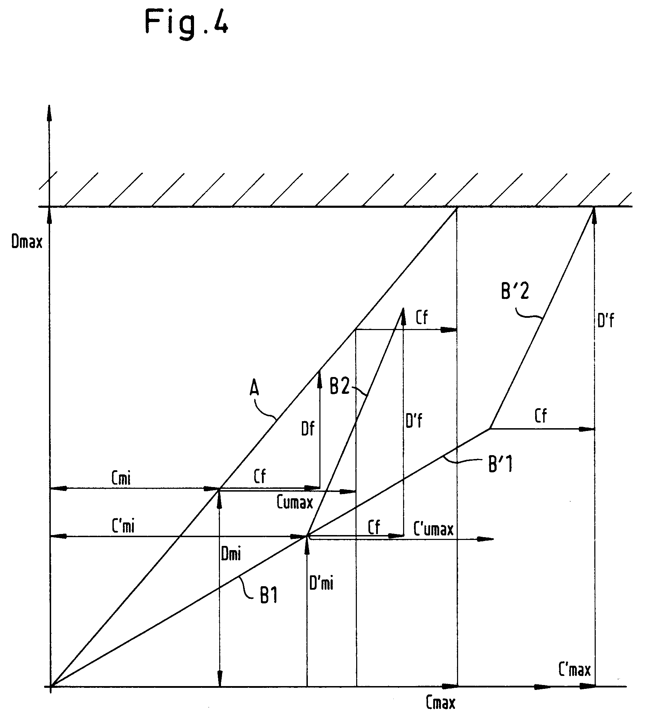

Die Vorteile der Erfindung lassen sich besser aus dem Diagramm von Fig. 4 ablesen, in dem der Weg der Bremsklötze auf der Abszisse und die Bewegung des den Bowdenzug betätigenden Handhebels an der Ordinate eingetragen ist.

Zunächst stellt die Linie A die praktisch lineare Beziehung zwischen der Bewegung des Handhebels und dem Weg der Bremsklötze bei einer herkömmlichen Bremse dar, bei der der Bowdenzug direkt auf die die Bremsklötze tragenden Arme einwirkt.

Die Bremsklötze sind im Neuzustand in einem anfänglichen "toten Gang" Cmi von der Felge entfernt angeordnet, und der Handhebel muß eine entsprechende tote Anfangsbewegung Dmi ausführen, bis die Bremsklötze mit der Felge in Kontakt kommen. Dann entspricht die eigentliche Bremsung einem Weg Cf der Bremsklötze, welcher eine Bewegung Df des Handhebels entspricht. Wenn die Bremsklötze neu sind und die Einstellung der Bremse korrekt ausgeführt ist, ist die Gesamtbewegung des Handhebels Dt gleich Dmin + Df und kleiner als die maximale Bewegung Dmax des Hebels, d.h. nach der der Hebel an seinem Halter in Anschlag kommt.

Wenn die Bremsklötze verschleißen, nimmt der tote Gang, den sie ausführen müssen, um einen Wert Cu zu, und die tote Bewegung des Handhebels nimmt um eine hierzu proportionale Strecke Du zu. Es existiert also ein maximaler Wert Cumax des Verschleisses, von dem an die Bremsung nicht mehr in ihrer vollen Wirkung gewährleistet ist, da der maximale Weg Cmax der Bremsklötze, der von der maximalen Bewegung Dmax des Handhebels zugelassen wird, im wesentlichen für die Überwindung des anfänglichen toten Ganges der Bremsklötze, der sich um den Verschleiß erhöht, aufgewendet wird und der für die eigentliche Bremsung verfügbare Weg kleiner als Cf wird. Natürlich kann der anfängliche tote Gang Cmi verringert werden, was, wie eingangs erläutert wurde, jedoch nur begrenzt möglich ist.

Abschließend zur Erörterung der bekannten Bremsen sei bemerkt, daß das Verhältnis der auf die Bremsklötze ausgeübten Bremskraft zu der auf den Handhebel auszuübenden Kraft zur Neigung der Linie A reziprok ist.

Die Kurve B zeigt die Beziehungen zwischen dem Weg der Bremsklötze und der Bewegung des Handhebels bei einer erfindungsgemäßen Bremse.

Als erstes ist die Beziehung zwischen dem toten Gang der Bremsklötze und der toten Bewegung des Hebels mit dem Segment B1 dargestellt, das eine schwächere Neigung als die Kurve A hat, da der tote Gang der Bremsklötze durch einen gleich großen Weg des Bowdenzugs, d.h. eine kleinere Bewegung des Handhebels, abgedeckt ist. Man kann also die Bremsklötze bei einer kleineren toten Anfangsbewegung D'mi des Hebels in einem wesentlich größeren anfänglichen Totgang C'mi als bei einer bekannten Bremse anordnen.

Wenn dann die Bremsklötze mit der Felge in Berührung gekommen sind und der Bügel 19 durch Verkanten auf den Führungsstangen 17 und 18 blockiert ist, wird ihr Weg durch das Verhältnis der Abstände an dem Arm 27 untersetzt, und die Beziehung zwischen der Bewegung des Handhebels und dem Weg der Bremsklötze entspricht dem Segment B2, das eine stärkere Neigung als das Segment B1 hat.

Bei einem gleichen Bremsweg Cf der Bremsklötze wie im vorhergehenden Fall ist der erforderliche Weg D'f des Handhebels größer und erfordert eine proportional kleinere Kraft, was für den Radfahrer angenehmer ist und eine bessere Dosierung der Bremsung ermöglicht.

Der Einfluß des Verschleisses der Bremsklötze ist weniger fühlbar. Durch ihn verlängert sich zwar das Segment B1 der Kurve, aber angesichts der geringeren Neigung dieses Segments bewirkt der Verschleiß eine geringere Verlängerung der Bewegung des Handhebels. Der Grenzzustand, der mit den Segmenten B'1 und B'2 dargestellt ist, zeigt, daß der maximale Verschleißweg C'umax der Bremsklötze wesentlich größer als bei einer bekannten Bremse ist und durch eine kleinere Verlängerung D'u der Bewegung des Handhebels abgedeckt wird. Auf diese Weise ändert sich die Stellung des Handhebels, von der an die tatsächliche Bremsung stattfindet, wenig in Abhängigkeit vom Verschleiß der Bremsklötze.

Ferner stellt man fest, daß die Bremsklötze bis zum Kontakt mit der Felge immer geradlinig bewegt werden, so daß der Verschleiß im wesentlichen in Schritten von gleichmäßiger Tiefe stattfindet und der einmal montierte Bremsklotz über eine größere Gesamttiefe verwendet werden kann, was bei bekannten Bremsen nicht der Fall ist, bei denen die Bremsklötze um eine feststehende Achse schwenkbar montiert sind und der Verschleiß in "keilförmigen" Schritten von ungleichmäßiger Tiefe stattfindet. Bei diesen Bremsen stellt man gewöhnlich auf der der Achse abgewandten Seite der Bremsklötze einen vollständigen Verschleiß fest, während auf der Seite der Drehachse Reibungsmaterial bestehen bleibt. Um diese Erscheinung auszugleichen, montieren manche Radfahrer die Bremsklötze um, indem sie die Seiten miteinander vertauschen. Dies ist bei der erfindungsgemäßen Bremse nicht mehr erforderlich.

Anhand des Diagramms von Fig. 4 ist der Fachmann in der Lage, in Abhängigkeit von der speziellen Anwendung zahlreiche Abwandlungen zu entwickeln, indem insbesondere die Parameter des Handhebels und des den Bremsklotz tragenden Arms so gewählt werden, daß die Segmente B1 und B2 die gewünschte Neigung erhalten.

Gemäß einer Abwandlung der in den Fig. 1, 2, 3, 5 und 6 gezeigten Bremse kann anstelle des zweiten Bügels 31 eine Einheit vorgesehen werden, die im wesentlichen dieselbe Ausbildung hat wie die aus dem ersten Bügel, dem den Bremsklotz tragenden Arm und seine Rückholfeder bestehende Einheit, wobei die Hülle des Bowdenzugs auf den zweiten Arm einwirkt. Die Führungsstangen sind in diesem Fall an ihren beiden Enden gleich ausgebildet.

Anstelle der Führung in Form von zwei Führungsstangen kann auch eine einzige Führung mit nicht kreisförmigem, beispielsweise quadratischem Querschnitt vorgesehen werden, wobei das Seil 37 entweder in der Achse oder auf jeder Seite der Führung verläuft.

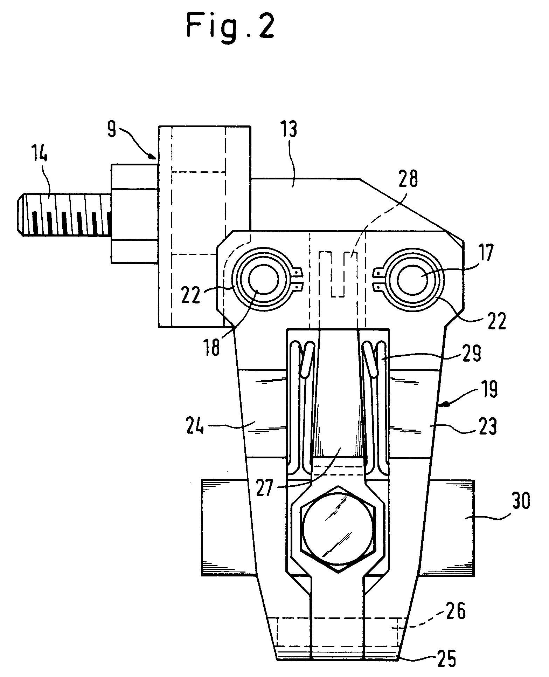

Wie Fig. 2 ferner zeigt, ist der Sockel 13 an dem Fahrradrahmen über eine Gleitbefestigung 9 montiert, die eine einfache und schnelle Regulierung der korrekten Stellung der Bremsklötze gegenüber den Flanken der Felge gestattet.

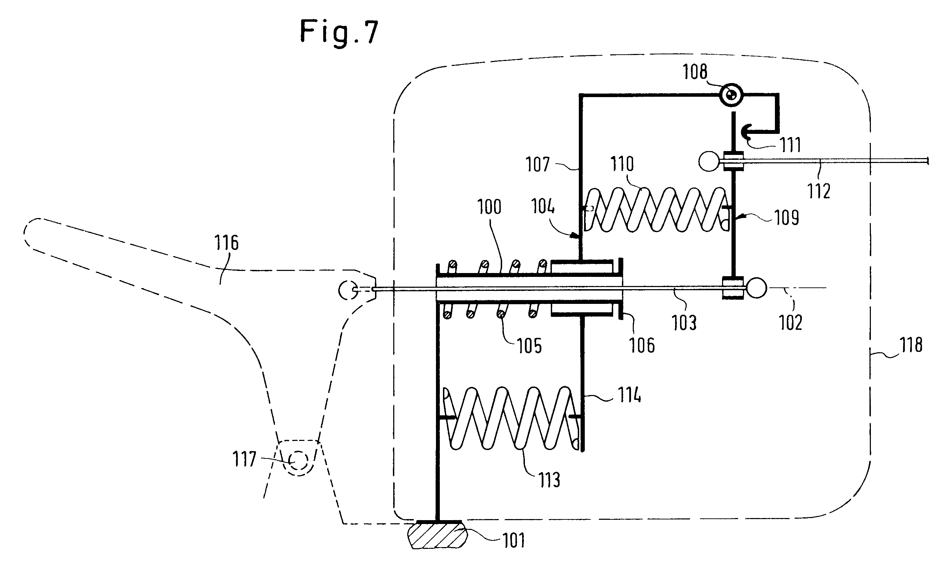

Gegenstand der Erfindung ist ferner eine Ausführungsform, die in Verbindung mit einem handelsüblichen Handhebel und einer handelsüblichen Bremse verwendbar ist, wie sie schematisch in Fig. 7 gezeigt ist.

Eine lineare Führung 100 ist an einem feststehenden Halter 101 montiert und definiert in ihrer Achse eine Führungslinie 102, in der sich ein Zugseil 103 erstreckt. Dieses kann das Seil eines von dem Handhebel einer Fahrradbremse kommenden Bowdenzugs oder eines beliebigen Bowdenzugs sein, der in einem Kraftfahrzeug oder an einer Maschine verwendet wird. Ein Bügel 104 gleitet auf der Führung 100 und wird durch ein elastisches Organ oder eine Feder 105 gegen einen Anschlag 106 der Führung zurückgeholt. Der Bügel besitzt einen länglichen Körper 107, der auf einer Seite der Führung 100 überhängend angeordnet ist und dessen von der Führung entferntes Ende eine Drehachse 108 für einen Arm 109 trägt. Dieser Arm 109 erstreckt sich bis in die Höhe der Führungslinie 102 zurück und ist am Ende des Zugseils 103 eingehängt. Eine Feder 110, die, bezogen auf die Achse 108 eine Kraft ausübt, die etwas größer als die der Feder 105 ist, ist zwischen dem Bügel 104 und dem Arm 109 angeordnet und holt diesen an einen Anschlag 111 zurück, der an dem Bügel gebildet ist. Ein Ausgangsseil 112 ist an dem Arm an einem zwischen der Drehachse 108 und der Führungslinie 102 gelegenen Punkt eingehängt. Dieses Seil kann das Seil eines Bowdenzugs sein, der zu einer herkömmlichen Fahrradbremse, zu einem mechanischen Betätigungsorgan für eine Kraftfahrzeugbremse oder zu einem mechanischen Betätigungsorgan für ein Maschinenorgan führt.

Die Vorrichtung arbeitet im wesentlichen so, wie im vorhergehenden beschrieben wurde:

a) In der Ruhestellung nehmen die Organe die in der Figur gezeigten Stellungen ein: der Bügel 104 ist durch die Feder 105 an den Anschlag 106 der Führung 100 und der Arm 109 ist durch die Feder 110 an den Anschlag 111 des Bügels 104 angedrückt.

b) Während der ersten Zugphase des Seils 103, während der das Ausgangsseil 112 ausgangsseitig keinen wesentlichen Widerstand erfährt, sind die einzigen Kräfte, die auf den Bügel 104 ausgeübt werden, und zwar die Kraft der Feder 105 und die von dem Eingangsseil 103 über den Arm 109 und die nicht komprimierte Feder 110 ausgeübte Kraft, in der Führungslinie 102 gerichtet, und der Bügel gleitet frei auf der Führung 100 (in der Figur nach links), indem er das Ausgangsseil 112 in einer Bewegung, die gleich der des Eingangsseils ist, mit einer Kraft mitnimmt, die gleich der von dem Eingangsseil ausgeübten Kraft abzüglich der Kraft der Feder 105 ist. Diese Phase findet statt, bis das Ausgangsseil seitens der von ihm betätigten Organe einen Widerstand erfährt.

c) In der nachfolgenden Zugphase des Eingangsseils 103 erhält der Bügel 104 infolge des von dem Ausgangsseil 112 ausgeübten Widerstands ein Moment um eine zur Führungslinie senkrechte Achse, was eine Blockierung des Bügels durch Verkantung auf der Führung 100 zur Folge hat. Die Kraft und die Bewegung des Eingangsseils werden jetzt nur noch auf den Arm 109 übertragen, der sich um die Drehachse 108 verschwenkt (in der Figur im Uhrzeigersinn), wenn die Kraft der Feder 110 überwunden ist. Infolgedessen wird das Ausgangsseil nun über einen Weg mitgenommen, der kleiner als der des Eingangsseils ist, und zwar im Verhältnis des Abstandes der Drehachse 108 vom Einhängungspunkt des Ausgangsseils 112 zum Abstand der Drehachse 108 vom Einhängungspunkt des Eingangsseils, und mit einer im umgekehrten Verhältnis übersetzten Kraft.

Auch für dieses Ausführungsbeispiel sei auf die Kurven von Fig.4 verwiesen, die in diesem Fall die Beziehungen zwischen dem Weg des Eingangsseils und dem Weg des Ausgangsseils darstellen.

Wenn das Ausgangsseil häufig sowohl in der Ruhestellung als auch in der ersten Arbeitsphase von einer Restkraft beaufschlagt wird, wie es der Fall ist, wenn das Ausgangsseil an einer herkömmlichen Fahrradbremse eingehängt ist, die eine Feder zum Auseinanderspreizen der die Bremsklötze tragenden Arme besitzt, besteht die Gefahr, daß diese Restkraft auf den Arm und den Bügel ein so großes Moment ausübt, daß der Bügel vorzeitig durch Verkantung auf der Führung blockiert wird. Um dies zu vermeiden, wird die Vorrichtung zweckmäßigerweise durch eine Einrichtung ergänzt, die an dem Bügel ein gleich großes, aber entgegengesetztes Drehmoment erzeugt.

Dies kann beispielsweise durch eine Ausgleichsfeder in Form einer Kompressionsfeder 113 erreicht werden, die zwischen den feststehenden Halter 101 und eine auf der anderen Seite der Führungslinie 102 angeordnete Verlängerung 114 des Bügels eingesetzt ist. Das Produkt aus der Kraft der Kompressionsfeder 113 und dem Abstand ihres Angriffspunktes von der Führungslinie muß gleich dem Produkt aus der vom Seil 112 übertragenen Restkraft und dem Abstand seines Angriffspunktes von der Führungslinie sein. Da die Kraft der Kompressionsfeder 113 sich zu der Restkraft des Seils 112 in Höhe des Eingangsseils hinzuaddiert, wird man natürlich die Kraft dieser Kompressionsfeder verringern, indem man ihren Angriffspunkt soweit wie praktisch möglich entfernt.

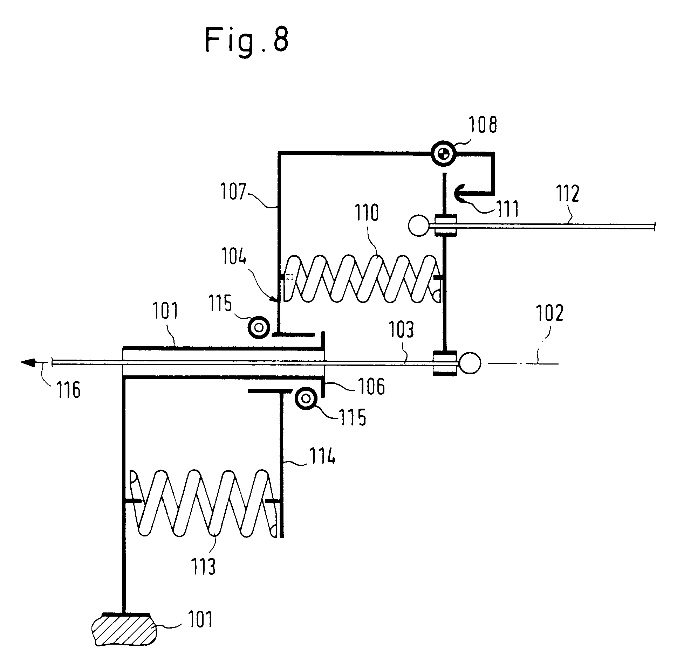

Es ist jedoch nicht sicher, daß die von dem Ausgangsseil ausgeübte Restkraft unter allen Umständen im wesentlichen konstant bleibt. Insbesondere kann diese Kraft mit der Zeit schwächer werden, wie es häufig bei Fahrradbremsen infolge von Verschmutzung oder Korrosion der Fall ist und was zu einer vorzeitigen Blockierung des Bügels führen kann, da nur noch von der Ausgleichsfeder 113 ein Drehmoment erbracht wird. In diesem Fall wird zweckmäßigerweise die in Fig.8 gezeigte Abwandlung vorgesehen, bei der eine Verkantung des Bügels auf der Führung nur in einer Richtung zugelassen wird, indem beispielsweise die Gleitflächen auf einer Seite der Führung gegen die auf der anderen Seite versetzt werden und/oder eine solche Blockierung positiv durch Wälzorgane 115 verhindert werden, die an dem Bügel montiert sind und auf der Führung aufliegen, wenn der Bügel sich unter dem von der Ausgleichsfeder 113 angelegten Drehmoment verschwenkt. Man kann nun auf die Rückholfeder 105 verzichten, da ihre Funktion durch die Feder 113 erfüllt wird.

Diese beiden Ausführungsformen können schließlich direkt mit einem Handhebel gekoppelt werden, wie in Fig.7 mit unterbrochenen Linien gezeigt ist, wobei der Hebel 116 über eine Achse 117 an demselben Halter 101 angelenkt ist und direkt das Eingangsseil 103 zieht. Zum Schutz gegen schädliche Einflüsse von außen ist die Einheit von einem Gehäuse 118 umgeben.

**Patentansprüche**

1. Betätigungsmechanismus, insbesondere für Bremsen, vor allem Fahrradbremsen, gekennzeichnet durch
   eine Führung (17, 18; 100), die eine zur Richtung einer auszuübenden Ausgangskraft im wesentlichen parallele Führungslinie (XX; 102) definiert, einen länglichen Bügel (19; 104), der verschiebbar auf der Führung montiert ist und sich im wesentlichen senkrecht auf einer Seite der Führung erstreckt, einen Arm (27; 109), der über eine zur Richtung der auszuübenden Kraft und gleichzeitig zum Bügel (19; 104) senkrechte Drehachse (26; 108) an einem von der Führung entfernten Ende des Bügels angelenkt ist und sich bis zu der Führungslinie (XX; 102) erstreckt, Rückholeinrichtungen (34, 35, 29; 105, 110), die auf den Bügel (19; 104) und auf den Arm (27; 109) in einer der Richtung der auszuübenden Ausgangskraft entgegengesetzten Richtung einwirken und diesen Arm in eine Ruhestellung zurückholen, in der er an dem Bügel in Anschlag ist, Eingangseinrichtungen (37; 103) am Ende des Arms (27; 109) zur Aufnahme einer zumindest im wesentlichen in der Führungslinie (XX; 102) gerichteten Eingangskraft sowie die Ausgangskraft liefernde Ausgangseinrichtungen (30; 112), die an dem Arm (27; 109) zwischen der Drehachse (26; 108) und den Eingangseinrichtungen (37; 103) angeordnet sind.

2. Betätigungsmechanismus nach Anspruch 1, dadurch gekennzeichnet, daß die Führung mindestens eine Stange bzw. einen Stab (17, 18) aufweist und der Bügel (19) einen Querdurchgang (20, 21) besitzt, der denselben Querschnitt wie die Stangebzw. der Stab hat und von dieser durchsetzt ist.

3. Betätigungsmechanismus nach Anspruch 2, dadurch gekennzeichnet, daß die Führung zwei zueinander parallele zylindrische Stangen (17, 18) besitzt, die zwischen sich die Führungslinie (XX) definieren, wobei der Bügel (19) zwei zueinander parallele Querdurchgänge (20, 21) aufweist, die denselben kreisförmigen Querschnitt wie die Stangen haben und von diesen durchsetzt sind, und daß das mit den Eingangseinrichtungen (37) verbundene Ende (28) des Arms (27) sich zwischen den Stangen erstreckt.

4. Betätigungsmechanismus nach einem der Ansprüche 1 bis 3, dadurch gekennzeichnet, daß die elastischen Rückholeinrichtungen aus einer Feder (29) bestehen, die zwischen dem Bügel (19) und dem Arm (27) angeordnet ist.

5. Betätigungsmechanismus nach einem der vorhergehenden Ansprüche, gekennzeichnet durch einen Sockel (13), der zur Befestigung an einem Träger bestimmt ist, wobei die Führung (17, 18) an dem Sockel (13) montiert ist.

6. Betätigungsmechanismus nach Anspruch 5, dadurch gekennzeichnet, daß die Führung (17, 18) in dem Sockel (13) in der Richtung der Führungslinie (XX) verschiebbar montiert ist.

7. Betätigungsmechanismus nach einem der Ansprüche 5 und 6, dadurch gekennzeichnet, daß die elastischen Rückholeinrichtungen aus einer zwischen dem Sockel (13) und dem Bügel (19) angeordneten Feder (34, 35) bestehen.

8. Betätigungsmechanismus nach einem der Ansprüche 1 bis 7, gekennzeichnet durch eine zweite Einheit, die aus einer Führung, einem Bügel, einem Arm, elastischen Rückholeinrichtungen, Eingangseinrichtungen und Ausgangseinrichtungen besteht und bezüglich einer zur Führungslinie senkrechten Ebene zur ersten Einheit symmetrisch ist.

9. Betätigungsmechanismus nach Anspruch 8, dadurch gekennzeichnet, daß die mit dem ersten und mit dem zweiten Arm verbundenen Eingangseinrichtungen aus einem Bowdenzug bestehen, dessen Seil (37) an dem ersten Arm und dessen Hülle (38) an dem zweiten Arm angreifen.

10. Betätigungsmechanismus nach einem der Ansprüche 8 oder 9, für eine Bremse für ein um eine Drehachse rotierendes Organ (12) mit Bremsflächen (10), die zur Drehachse senkrecht und nach zwei einander entgegengesetzten Seiten gerichtet sind, dadurch gekennzeichnet, daß die Führungen (17, 18) parallel zu der Drehachse angeordnet sind und daß die Ausgangseinrichtungen aus Klötzen (30, 36) aus einem Reibungsmaterial bestehen, die an den Armen so befestigt sind, daß sie sich gegenüber den Bremsflächen befinden.

11. Betätigungsmechanismus nach Anspruch 10 in Abhängigkeit von einem der Ansprüche 5 bis 7 für eine auf die Flanken (10) einer Felge (11) eines Rades (12) einwirkende Fahrradbremse, dadurch gekennzeichnet, daß der Sockel (13) am Rahmen oder an der Vordergabel des Fahrrads befestigt ist.

12. Betätigungsmechanismus nach Anspruch 11, dadurch gekennzeichnet, daß die Befestigung des Sockels (13) am Fahrradrahmen mindestens hinsichtlich des Abstandes von der Radachse verstellbar ist.

13. Betätigungsmechanismus nach einem der Ansprüche 1 bis 7, gekennzeichnet durch einen zweiten Bügel (31), der an der Führung (17, 18) auf derselben Seite wie der erste Bügel (19) befestigt ist, zweite Eingangseinrichtungen (38), die auf den zweiten Bügel (31) in der Führungslinie (XX) eine zweite, der ersten entgegengesetzte Eingangskraft ausüben, und zweite Ausgangseinrichtungen (36) an dem zweiten Bügel (31), die eine zweite, der ersten im wesentlichen entgegengesetzte Ausgangskraft liefern.

14. Betätigungsmechanismus nach Anspruch 1, gekennzeichnet durch ein elastisches Ausgleichsorgan (113), das auf den Bügel (104) um eine zur Führungslinie (102) und zum Bügel senkrechte Achse ein Ausgleichsmoment ausübt, das im wesentlichen so groß wie ein Restmoment, das durch eine von den Ausgangseinrichtungen (112) ausgeübte Restreaktionskraft erzeugt wird, und diesem entgegengesetzt ist.

15. Betätigungsmechanismus nach Anspruch 14, dadurch gekennzeichnet, daß der Bügel (104) auf der anderen Seite der Führung (100) eine Verlängerung (114) besitzt und daß das elastische Ausgleichsorgan (113) aus einer Feder besteht, die auf eine Verlängerung (114) eine Kraft ausübt, die zur Restkraft parallel und in derselben Richtung wie diese gerichtet ist.

# Fig.1

# Fig.2

## Fig.3

# Fig.4

# Fig.5

# Fig.6

# Fig.7

EP 0 490 196 A1

# Fig.8

**Europäisches Patentamt**

# EUROPÄISCHER RECHERCHENBERICHT

Nummer der Anmeldung

EP 91 12 0600

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 870 127 (D.G. WILSON ET AL.)<br><br>* Spalte 2, Zeile 20 - Spalte 4, Zeile 17; Abbildungen 1,2 * | 1,2,4-7, 9-11 | B62L1/10 |
| Y | | 13 | |
| A | | 3,8,12, 14,15 | |
| | --- | | |
| Y | GB-A-328 964 (L.T. MARR)<br>* Seite 3, Zeile 17 - Seite 4, Zeile 27; Abbildung 1 * | 13 | |
| A | | 1,8-12 | |
| | --- | | |
| A | FR-A-944 908 (M.E. LEPICARD)<br><br>* das ganze Dokument * | 1,5,6, 9-11,13 | |
| | --- | | |
| A | DE-C-800 635 (E. HOBI-WEISE)<br><br>* das ganze Dokument * | 1,8-11, 13-15 | |
| | --- | | **RECHERCHIERTE SACHGEBIETE (Int. Cl.5)** |
| A | NL-A-7 003 675 (A. PIUBELLO)<br><br>* Abbildung 1 * | 1,5-7, 9-13 | B62L<br>B60T<br>F160 |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 13 MAERZ 1992 | VAN DER VEEN F. |